Europäisches Patentamt

European Patent Office

Office européen des brevets

(19)

(11) Publication number: **0 155 734**
**A2**

(12) **EUROPEAN PATENT APPLICATION**

(21) Application number: **85200383.9**

(22) Date of filing: **15.03.85**

(51) Int. Cl.⁴: **A 01 D 78/10**
**A 01 D 80/02**

(30) Priority: **19.03.84 NL 8400869**

(43) Date of publication of application:
**25.09.85 Bulletin 85/39**

(84) Designated Contracting States:
**DE FR GB NL**

(71) Applicant: **Texas Industries Inc.**
**15 Pietermaai**
**Willemstad Curaçao Netherlands Antilles(NL)**

(72) Inventor: **Van der Lely, Cornelis**
**7 Brüschenrain**
**CH-Zug(CH)**

(74) Representative: **Mulder, Herman et al,**
**Octrooibureau Van der Lely N.V. Weverskade 10 P.O. Box 26**
**NL-3155 ZG Maasland(NL)**

(54) A crop displacing machine.

(57) A haymaking machine comprises a rake member (3,7,-9,10,11) provided with crop engaging members (15). The members (15) are independently mounted on the rake member for upwards and downwards movement about respective pivotal shafts (16). In operation they engage stubble on the field to be worked. Each member (15) included a flexible part (28) made from natural or synthetic rubber or a synthetic resin. Various configurations for the members (15) are disclosed.

EP 0 155 734 A2

Fig. 5

Croydon Printing Company Ltd.

T 313.

A CROP DISPLACING MACHINE

This invention relates to a crop displacing machine, such as a hay making machine, comprising a drivable rake member provided with a crop engaging member.

Crop displacing machines are known which comprise a drivable rake member provided with crop engaging members which are mounted on the rake member for upwards and downwards movement independently of each other and for contact, in operation, with stubble on a field to be worked.

Such known machines are intended for displacing crop lying on the ground, for example, hay, grass and the like. In order to avoid losses such crops should be displaced smoothly. Furthermore the machine should be able to run at a relatively high speed over uneven land. Known machines, in which the crop engaging members are steel tines, have the disadvantage that these tines may penetrate the soil so that dirt, for example, earth may get into the displaced crop. Such steel tines have the additional disadvantage that parts of them may break off and be picked up by a loading van or a forage harvester, in which case they may damage the mechanisms of these implements, for example the knives of a loading van.

Moreover, crop contaminated with broken metal tines may, if used as fodder, give rise to injury and infections in the stomachs of cattle or other livestock.

According to the present invention, the crop engaging members each comprise a flexible part made from natural or synthetic rubber or synthetic resin, said flexible part, during operation, being in contact with stubble on a field to be worked.

Such crop engaging members are quite capable of following the ground, do not damage the crop and do not give rise to the above-mentioned inconveniences.

For a better understanding of the present invention and to show how it may be carried into effect, reference will now be made, by way of exemple, to the accompanying drawings, in which:

Figure 1 is a schematic plan view of a crop displacing machine having a single rake member;

Figure 2 is a schematic plan view of a crop displacing machine having two rake members disposed for tedding crop;

Figure 3 is a schematic plan view of a crop displacing machine comprising two rake members disposed to act as a side delivery rake;

Figure 4 is a plan view showing a first embodiment of a crop engaging member;

Figure 5 is a view taken in the direction of the arrow V in Figure 4;

Figure 6 is a sectional view taken on the line VI - VI in Figure 5;

Figure 7 is a front view of a second embodiment of a crop engaging member;

Figure 8 is partly sectioned view taken in the direction of the arrow VIII in Figure 7;

Figure 9 is a plan view taken in the direction of the arrow IX in Figure 7;

Figure 10 is a front view of a third embodiment of a crop engaging member;

Figure 11 is a partly sectioned view taken in the direction of the arrow XI in Fig. 10;

Figure 12 is a plan view taken in the direction of the arrow XII in Figure 10;

Figure 13 is a front view of a fourth embodiment of a crop engaging member;

Figure 14 is a sectional view taken on the line XIV-XIV in Figure 13;

Figure 15 is a plan view taken in the direction of the arrow XV in Figure 13;

Figure 16 is a front view of a fifth embodiment of a crop engaging member; and

Figure 17 is a front view of a sixth embodiment of a crop engaging member.

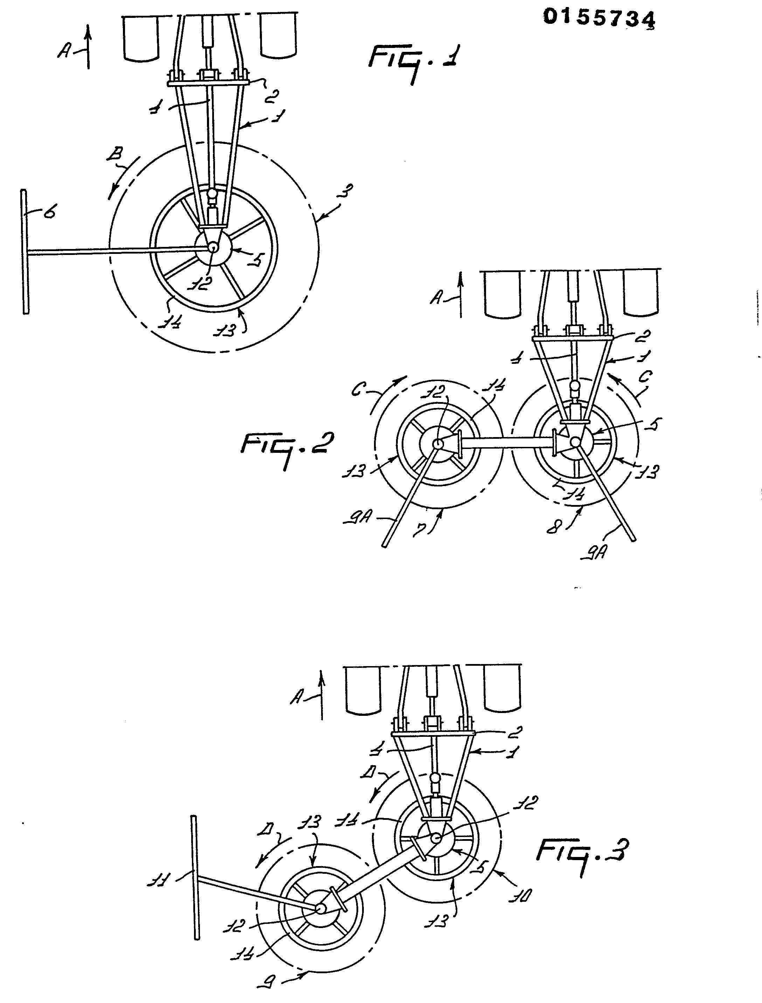

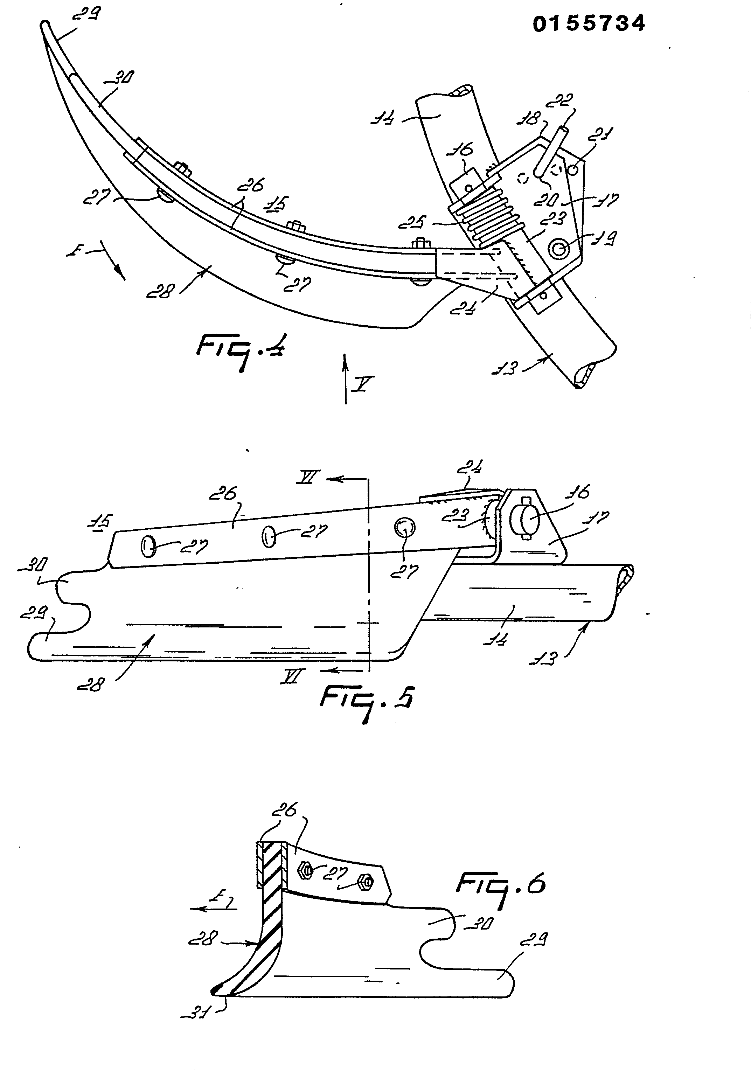

Figures 1, 2 and 3 schematically show three types of machine to which the present invention can be applied. The machine of Figure 1 is a hay rake having a frame 1 provided with a trestle 2 and a rake member 3. The trestle 2 enables the machine to be hitched to the three-point lifting device of a tractor for drawing the machine so that the tractor can lift the machine from the ground, for example, into a transport position. The frame 1 and the trestle 2 are also present in a similar manner in the machines shown in Figures 2 and 3. All of the machines shown in Figures 1 to 3 can be driven from the power take-off shaft of the tractor by means of an auxiliary shaft 4 provided with universal joints, which is connectable to an input shaft of a drive mechanism 5 which converts the rotation of the auxiliary shaft 4 into rotation of the rake member or members of the machine. The single rake member 3 of the machine of Figure 1 can be driven via the auxiliary shaft 4 and the drive mechanism 5 in the direction B, and crop engaging members of the rake member 3 displace the crop in the direction B and deposit the crop in a swath which is formed between a lateral boundary of the rake member 3 and a swath board 6 which is spaced from the side of the rake member 3. In the machine of Figure 2, the auxiliary shaft 4 drives the two rake members 7 and 8 in opposite directions C so that the crop engaged by the crop engaging members of the rake members 7 and 8 is passed between the rake members to the rear and to one side, the crop thus being tedded or deposited in a swath. The machine of Figure 2 ————————————————

comprises swath boards 9A of known type, which allow tedding of the crop when they are in the position shown but which can be turned towards each other (so that they converge rearwardly) so that the crop is deposited in the form of a swath in the region between the rake members 7 and 8.

In the machine shown in Figure 3 the rake members 9 and 10 are driven via the auxiliary shaft 4 in the same direction of rotation D. The rake wheel 10 is disposed ahead of the rake member 9 (with respect to the travel directionA) so that crop picked up by the rake wheel 10 is passed in the region the two rake wheels towards the rake wheel 9, which delivers it to one side of the machine at a swath board 11.

The rotary axes 12 of the rake members 3, 7, 8, 9 and 10 extend upwardly. They lie in a vertical plane extending in the travel direction A and slope forwardly from bottom to top. The result of this is that the crop engaging members, in the front part of their path, are in a lowermost position with respect to the ground (i.e. an operative position), the lower parts of the crop engaging members being at ground level.

Each of the rake members shown comprises a carrying body 13 having a rim 14 which is supported by spokes on a hub of the rake member. The rim 14 is centred on the rotary axis 12 of the rake member and may comprise a hollow circular tube. The rim 14 is parallel to a plane at right angles to the rotary axis 12. Crop engaging members 15, to be described later, are mounted on the rim 14 and extend outwardly from the rim in a direction substantially parallel to a plane at right angles to the rotary axis 12. In the machine shown in Figures 1 to 3, the crop engaging members 15 on each of the rims 14 may take the form of one or more of the designs now to be described.

In the embodiment of Figures 4 to 6 the rim 14 is provided, at the position where each crop engaging member 15 is to be fitted, with a pivotal shaft 16, the centre line of which, as viewed on plan, is tangential to a circle having its centre on the rotary axis 12. The centre line of each pivotal shaft 16 may be inclined to a plane at right angles to the respective rotary axis 12. Each pivotal shaft 16 is journalled in a generally U-shaped support 17 having two limbs which extend upwardly and a web which is situated at the level of the top of the rim 14. An adjusting plate 18 is welded to the rim in the region of the support 17 (Figure 4). The adjusting plate 18 is substantially normal to the rotary axis 12 and projects from the rim towards the rotary axis. The web between the limbs of the U-shaped support 17 is at least partly in contact with the upper surface of the adjusting plate 18 and is pivotally connected to the plate 18 by a pivotal shaft 19, which is substantially parallel to the rotary axis 12. The flat web has a hole 20 at a position away from the pivotal shaft 19. By turning the web and hence the shaft 16 about the pivotal shaft 19, the hole 20 can be brought into register with any one of a series of holes 21 in the subjacent adjusting plate 18, the centres of these holes 21 lying on the arc of a circle centred on the axis of the pivotal shaft 19. A locking pin 22 can be passed through the hole 20 in the web and a selected one of the holes 21 in the adjusting plate 18 so that the assembly of the support 17 and the pivotal shaft 16 journalled in it can be turned about the pivotal shaft 19 and fixed in various selected positions (in this embodiment, four positions) with respect to the adjusting plate 18 which is rigidly secured to the rim 14.

A sleeve 23 surrounds the pivotal shaft 16 between the limbs of the support 17. A metal holder 24 is welded to the outer surface of the sleeve 23 along part of its length. The metal holder 24 extends outwardly from the sleeve 23 and is in the form of a plate. The rest of the sleeve 23 is surrounded by a helical torsion spring 25 situated between the holder 24 and one of the limbs receiving the pivotal shaft 16. The end of the helical spring 25 nearer the limb of the support 17 is fixed to that limb (for example, by inserting the end of the spring through a hole in the limb), and the other end of the helical spring is fastened to the sleeve 23 or to the holder 24. During operation the torsional spring 25 is stressed so that the holder 24, which extends outwardly from the rim 14, is urged downwards.

The lower face of the holder 24 is provided with the inner ends of two spaced, substantially parallel, elongate holding strips 26 which extend outwardly with respect to the carrying body 13. The metal holding strips 26 are curved rearwardly with respect to the direction of rotation E (which may correspond with one of the directions of rotation B, C, D) of the rake member. A part 28 of the crop engaging member is clamped between the holding strips 26 by means of bolts 27.

The holding strips 26 are disposed one on each side of the upper edge region of the part 28, this edge appearing straight when viewed in the tangential direction of Figure 5. The part 28 of the crop engaging member is made from rubber, a synthetic resin or a similar flexible material and it may be provided with a reinforcement in the form of nylon fibre, a reinfrocing mat of a different substance, thin steel wires or the like, which can enhance the wear resistance, the strength and the rigidity of the flexible part 28. As indicated in the sectional view of Figure 6, the thickness of the material of the part 28 is greater at the top and in the middle than it is in the lower region. Near the lower end, the thickness of the material decreases downwardly and the lower edge is in the form of a slightly blunt tapering lip. The lower edge of the part 28 is uninterrupted and, as viewed tangentially (Figure 5),it appears rectilinear. At its inner end the lower edge meets an upwardly and inwardly inclined edge which extends towards the pivotal shaft 16. At its outer end the lower edge meets an outer edge which defines two projections 29 and 30 disposed one above the other. These projections 29, 30 are outwardly and rearwardly inclined as a result of the rearward curve of the crop engaging member. The upper extension 30 adjoins the material clamped between the holding strips 26. As shown in the sectional view of Figure 6, the lower region of the flexible part 28 of the catching member is curved to the front,with respect to the direction of rotation E, so that the underside 31 of the lower edge region is in contact with the ground or penetrates the stubble during operation.As viewed in a direction opposite the direction E (i.e. the direction of the arrow V in Figure 4), the part 28 of the catching member is concave with the upwardly extending upper part of the part 28 merging into the above-mentioned lower forwardly directed lip. The rigidity of the part 28, when subjected to forces produced by the crop and the ground, depends on the flexibility of the material of part 28, on any reinforcement of the flexible material, and on the magnitude of the centrifugal forces during operation.

During operation the rim 14, with the rest of the carrying body 13 is driven in the direction E. The crop engaging member 15 can move up and down with respect to the carrying body 13 about the pivotal shaft 16. The centrifugal forces produced during operation and acting on the crop engaging member 15 will act at the centre of gravity of the crop engaging member,which is generally located below a plane normal to the rotary axis 12 and the axis of the pivotal shaft 16. The helical torsion spring 25 is stressed so that the crop engaging member 15 is pressed against the ground with relatively light force. Thus the spring 25 can ensure a fine control or balance of the force of application to the ground. This has the important advantage that the relatively thin lower edge of the part 28, the lower surface 31 of which moves along the ground or through the stubble, is, owing to the tapering lip, sufficiently flexible to enable it to follow unevennesses of the ground so that all crop is picked up by the concave front of the part 28. Since the lower edge of the part 28 tends to deform slightly in a direction opposite the direction E due to the load applied to it in operation, the concave form of the front face of the part 28 tends to become further pronounced, this effect being enhanced by the downward pressure applied by the torsion spring 25 and the centrifugal forces which act radially outwardly on the lower region of the rearwardly curved part 28. The outwardly and rearwardly inclined projections 29 and 30 produce a sharp separation during operation between the crop carried along by the crop engaging member 15 and the crop remaining at the side of the strip of ground not being worked. In the region of the path where the crop engaging member delivers the crop, the crop accumulated in front of the crop engaging member is rapidly released owing to the rearwardly curved shape of the member, the effect of the air stream and the projections 29 and 30, along a relatively small circumferential part of the path by the crop engaging members in the region where the lower edge of the crop engaging member is free of the ground.

When the lower edge of the part 28 rises above the ground during its rearward rotation, the ground pressure opposing the torsion spring 25 abruptly falls off so that the crop engaging member 15 turns downwardly about the pivotal shaft 16 until the lower edges of the strips 26, at the ends nearer the pivotal shaft 16, strike the web of the bracket 17, the flexible material of the part 28 thus being subjected to shock loading. This load contributes significantly to the disengagement of the crop owing to the momentary deformation of the curved, flexible material. An important advantage of the construction described is the upwards and downwards movability of the crop engaging member 15 as a whole about the pivot shaft 16, which movability, together with the flexibility of the part 28 and the ready deformation of the lower lip, ensures excellent adaptation to the unevennesses of the ground.

The extent to which the crop engaging member trails to the rear can be adjusted by displacing the crop engaging member 15 about the pivotal shaft 19 after removing the locking pin 22, which can then be reinserted into the hole 20 and a selected one of the holes 22. This adjustability is important when using the crop engaging member for tedding or raking. For tedding, the crop engaging member should be directed more outwardly than for raking, when the crop engaging member should be directed further to the rear. In the case of the curved shape of the crop engaging member shown in Figure 4, the outermost free end portion thereof, as viewed on plan, is approximately contiguous with a circle centred on the rotary axis 12.

The pivotable support of the crop engaging member shown in Figure 4 by means of the pivotal shaft 16, its adjustability about the pivotal shaft 19, the loading by the torsional spring 25 and the way in which the crop engaging members shown in Figure 4 is mounted on the rake member also apply to the further embodiments now to be described hereinafter.

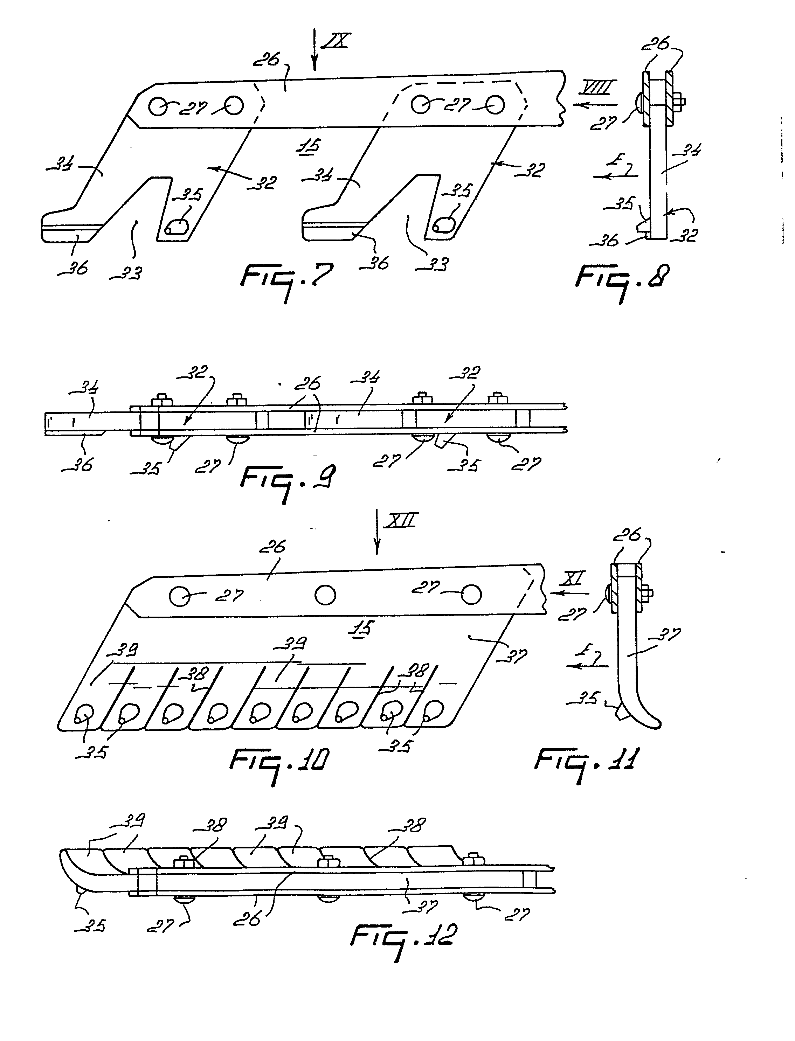

In the second embodiment shown in Figures 7 to 9, two identical units 32 are clamped between the holding strips 26. The units 32 are spaced apart in the outward direction. The crop engaging member 15 in this embodiment is straight as viewed on plan (Figure 9), and can be adjusted by means of the locking pin 22 to lie at different angles with respect to the carrying body 13. The holding strips 26 enclose the upper edges of the unit 32, and the operative parts of the units 32 extend below the strips 26 to the ground (in their operative position). The distance between the two units 32 is approximately equal to or slightly smaller than the dimension of each of the units measured in the outward direction. In the lower region of its operative surface each unit 32 has two freely projecting fingers 34 which are separated from each other by a recess in the form of a downwardly flared opening 33. Above the opening 33, the fingers meet each other. The presence of the opening 33 means that the operative part of each unit 32 is relatively flexible so that a very satisfactory adaptation to the ground is ensured. Measured in the lengthwise direction of the crop engaging member 15, the greatest dimension of each opening 33 is about 5 to 10 cms. The opening 33 of each unit 32 extends from the lower edge of the unit to a position about midway between that lower edge and the underside of the holding strips 26. Forwardly extending projections are provided on the front faces of the units 32 near the lower ends of each of the two fingers 34 of each unit 32. These projections may be in the form of a cone or a truncated cone 35, the vertex of which is disposed in front of the plane of the respective unit 32 and the axis of which is inclined slightly downwards and towards the outside at an angle of about 45° (Figures 7 to 9). Near the lower ends of the fingers 34, ridges 36 may be provided which project from the front face of the flat unit 32 and extend along the lower edge of the respective fingers 34. The ridges 36 extend along the front faces of the crop engaging members and are parallel to the lower edge of the respective fingers and, in the working position of the catching member, parallel to the ground. Figure 7 shows that the radially inner finger of each unit, with respect to the rotary axis, is provided with a cone and the radially outer finger is provided with a ridge, but the inverse arrangement is also possible. Moreover, each unit 32 may be provided with only cones or only ridges.

The flat material of the units 32 is the same as mentioned above; it is flexible and comprises rubber or a synthetic resin, perhaps with a reinforcement. As shown in Figure 8, the material of each unit extends, in this embodiment, rectilinearly downwards from its clamped part. Figure 9 shows that, as viewed on plan, the crop engaging member is straight.

During operation, when the lower edges of the two units 32 are in the foremost part of the path of the crop-engaging members at ground level, the crop is temporarily effectively retained by the cones 35. The outwardly directed orientation of the cones contributes to the release of the crop from the catching members when they move away from the ground.

The fingers 34 of each unit 32 are downwardly and outwardly inclined so that the crop can readily slip off in the rear part of the path of the crop engaging members.

Also, the thickened parts formed by the ridges 36 retain crop which is pushed against the fingers 34 and penetrates into the openings 33. The crop remains hanging on the fingers owing to the ridges 36 and, during the rearward movement of the crop engagement member 15, the outward direction of the inner ridges 26 and of their inner faces furthers the release of the crop.

The cones 35 and the ridges 36 are integral with the respective unit 32 and are consequently made from the same material. The cones 35 and the ridges 36 reduce wear of the units 32 of the crop engaging member 15 along the lower edge of each of the units.

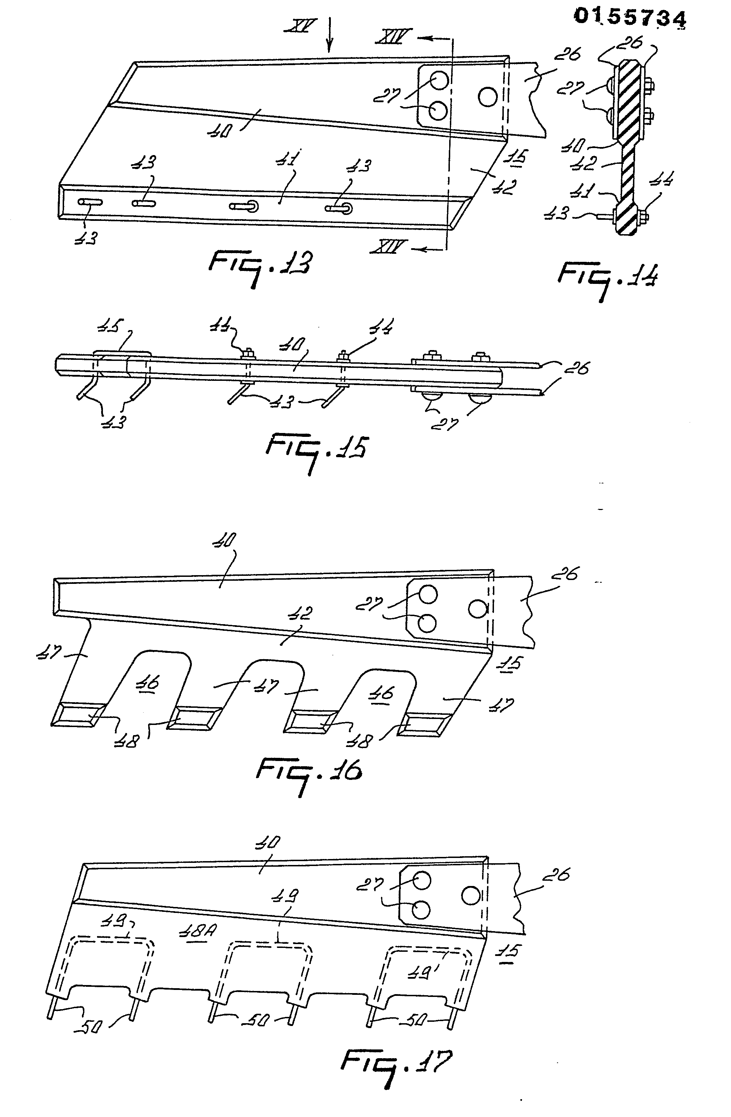

The third embodiment shown in Figures 10 to 12 comprises a crop engaging member 15 in the form of a panel 37 which is straight as viewed on plan. The panel 37 is clamped between the two holding strips 26. The panel 37, which is also flexible and made from the material mentioned above, has (as viewed in a direction opposite the direction of rotation E (Figure 10))the shape of a parallelogram, the upwardly directed edges of which slope downwardly and outwardly from the holding strips 26. In the operative position of the crop engaging member the lower edge of the panel 37, which is approximately parallel to the holding strips 26, bears on the ground or penetrates the stubble. From this lower edge the panel 37 has regularly spaced incisions 38 extending, as shown in Figure 10, parallel to the upwardly directed edges of the panel 37 so that a plurality of fingers 39 are formed (there are nine in the illustrated embodiment). The incisions 38 extend from the lower edge of the panel 37 up to a position approximately half way up the height of the panel 37 (measured up to the lower edge of the holding strips 26) so that a large number of adjacent, directly adjoining, flexible crop-displacing elements or fingers are formed. Owing to the flexibility of the material of the panel 37, these fingers 39 can optimally match the unevennesses of the ground. Near the lower edge of each finger 39 there is again provided a truncated cone, the base of which lies on the front face of the finger 39. The cone tapers towards the front. The axis of the cone slopes downwardly and outwardly so that the crop picked up in the working position of the crop engaging member 15 is temporarily retained by the cones 35, but, when the crop engaging member moves away from the ground, the cones further the release of the crop.

Figure 11 shows that, when the panel 37 is unstressed, the lower edge of the panel 37 curves to the rear with respect to the direction E so that the crop engaging member slidingly engages the ground with the lower part of its front face. This lower and rear edge terminates at a tapering lip. The rear face of the crop engaging member is concave. The vertices of the cones 35 are situated, in the working position of the crop engaging member, at a short distance above the ground.

In both of the embodiments shown in Figures 7 to 12, the diameter of the base of each cone 35 is about 3 to 8%, preferably about 5% of the overall dimension of the operative part of the crop engaging member 15, measured in an outward direction.

The lower edge of each finger 39 is deflected to the rear as the finger 39 slides over the ground in the direction E. The cones 35 are provided on the ground contacting part of each finger. Consequently, each cone will turn downwards as the respective finger follows an elevation of the ground surface so that the crop retained by the cone is prevented from prematurely sliding off in an undesirable manner. Although the material of the elements 32 of the preceding embodiment is not curved at its lower edge (Figure 8), the lower edge will also be deflected when it encounters an elevation of the ground so that the cones will have the same retaining function. The material of the cones 35 of Figures 10 to 12 is again integral with the flexible material of the panel 37.

The fourth embodiment shown in Figures 13 to 15 comprises a crop engaging member 15 formed from flexible material (of the kind described above) which is substantially a single integral component. In this embodiment the holding strips 26 extend along only a part, i.e. about 30%, of the overall length

0155734

of the crop engaging member, measured in an outward direction. The major part of the upper edge of the flexible material is thus not supported by the relatively rigid strips 26. The flexible material has ridges 40 and 41 which extend respectively along the upper edge and along the ground-contacting lower edge over substantially the whole length of these edges on both sides of the flexible panel 42 of the crop engaging member 15 (Figure 14). The ridges 40 and 41 are integral with the rest of the panel 42 interconnecting the ridges 40 and 41.

Steel pins 43 extend through holes in the material of the lower ridge 41 and project from the front of the crop engaging member, with respect to the direction of rotation E. These projecting parts of the steel pins 43 are directed outwardly at an angle of about 45° to the outer face of the front ridges 41 (Figure 15) and are parallel to a horizontal plane containing the lower edge of the crop engaging member. The steel pins 43 are relatively short corresponding to the upwards dimension of the ridge 41. Owing to the relatively small length of the pins 43 there is practically no risk of them breaking off during operation. The pins 43 may be made from spring steel. Figure 15 shows two alternative ways of fitting the pins 43 to the panel 42. Thus separate pins having screwthreads on their rear ends can be secured by nuts 44 engaging the rear face of the rear ridge 41, or an integral piece of steel wire can be used which is formed to provide two pins, which are spaced apart like the above-mentioned pins 43, and an intermediate piece 45 which interconnects the pins 43 and engages the rear face of the flexible material. In this latter alternative, the pins are fixed in position by the pin ends being bent outwardly away from the front face of the material. As shown in the view of Figure 13, the crop engaging member has the shape of a parallelogram, the upwardly directed boundary lines of which slope downwardly and outwardly from the upper edge.

Because the straight upper edge of the crop engaging member 15 is supported only partly by the metal strips 26, the crop engaging member can have great flexibility in the working position. Consequently, under the action of the forces acting during operation, it can assume the curved shape shown in Figure 4 for the first embodiment. The ridges 40 and 41 along the upper and lower edges of the catching member prevent the crop engaging member from being too flexible, the lower ridges 41 also reducing wear of the lower edge. During operation the pins 43 retain the crop picked up by the crop engaging member, since the crop wound around the pins 43 is held on the ground (compare the function of the cones 35), but the outwardly directed orientation of the pins 43 causes the crop to be readily released when the crop engaging member rises from the ground as it travels to the rear in its rotation about the rotary axis 12.

The fifth embodiment shown in Figure 16 comprises a crop engaging member 15, which is straight as viewed on plan and in which the holding strips 26 extend, as in the preceding embodiment, over part only of the outwardly measured dimension. The ridges 40 are again provided on both sides of the flexible material for avoiding excessive flexibility when subjected to the forces occurring in operation. In this embodiment the flexible material 42 is provided along its lower edge with openings 46 so that the lower part of the crop engaging member comprises separate fingers 47, each of which is provided near its lower edge with ridges 48 on both the front and rear sides, which ridges project from the surface of the material 42. The fingers 47 and the end faces of the ridges 48 slope outwardly and downwardly in order to enhance the disengagement of the crop over the part of the

0155734

path where the member 15 is spaced above the ground. The material of the ridges 40 and 48 is integral with that of the part 42. Measured in an outward direction the dimensions of the openings 46 are approximately equal to those of the fingers 47. The vertical cross section of the crop engaging member taken through one of the fingers 47 is similar to that shown in Figure 14.

In the sixth embodiment shown in Figure 17, the strips 26 again clamp the straight upper edge of the material 48A of the crop engaging member 15 over only part of its length, as in the embodiments of Figures 13 to 16. The upper edge is again provided with ridges 40 on the front and rear faces of the crop engaging member, but the lower edge is not provided with ridges. The flexible flat material 48A disposed below the ridges 40 is again integral with the material of the ridges 40. U-shaped spring steel rods 49 are vulcanised into the material 48A, these rods 49 being fully embedded in the material 48A. Only part of the limbs of the U-shaped rods 49 freely project from the underside of the material 48A to form short tines 50. Owing to the relatively small dimension of the projecting tines 50 the risk of breakage of these tines is practically nil. ·The length of the tines 50 is about 3 to 10% of the outwardly measured length of the flexible material 48A.

During operation the lower ends of the tines 50 move over the ground and through the stubble in the working position of the crop engaging member and pick up the crop lying on the ground and in the stubble. ·Crop accumulates on the front face of the material 48A bounded at the top by the front ridge 40. The ridge 40 and the material 48A form a cavity in which the picked-up crop can accumulate. During operation the lower region of the material 48A is in contact with the stubble on the field.

An analogous disposition is found in the embodiments shown in Figures 10 to 16 in which the ridges 40 and 41 and 40, 48 respectively together with the front face of the intermediate flexible material of the crop engaging member form a cavity for collecting the picked-up crop while the crop engaging member is in the working position.

The tines 50 slope outwardly and downwardly so that, as the crop engaging member moves rearwardly, the crop can readily leave the tines 50.

An important advantage of the crop engaging members described above is that the machine on which they are provided can move across the field at a relatively high speed without the crop engaging members losing their grip on the crop. The reason for this is that they can very readily follow unevennesses of the ground, the flexible lower edges, the fingers or the short tines being able to deflect readily to pass over humps in the ground and to drop into depressions in the ground. The flexible, resilient nature of the material ensures a vigorous and rapid downwards movement of the lower edge. The height of the crop engaging member as a whole is preferably selected to enable the lower edges of the crop engaging members to penetrate into depressions in the ground in the working position; this is achieved by adjusting the height of the machine as a whole (the ground wheels supporting the rake members are preferably upwardly and downwardly adjustable), by the mass distribution of the crop engaging member (which affects the action of centrifugal forces) and by the torque exerted by the helical spring 25. Even during high speed travel across the field, parts of the crop engaging members cannot penetrate into the ground because the parts coming into contact with the ground are blunt and because the crop engaging members are much more flexible than known groups of tines. By using crop engaging members embodying the present invention, short crops can also be fully displaced without damage to the soil. Since the crop engaging members consist of rubber or a synthetic resin there is no risk of tine parts breaking off, to leave fragments which could damage knives of a pick-up wagon or of a forage harvester. This also avoids the possibility of the crop being contaminated by broken tine portions, which could give rise to stomach injuries and infections in cattle or other livestock fed on the crop.

When travelling at a relatively high speed over the field, a significant rate of displacement of crop is obtained even at a relatively low speed of rotation of the rake member, because the dimensions of the crop engaging members 15, measured in the outward direction, can be relatively large i.e. up to about 60 cms, measured from the circumference of the carrying body. This large dimension is possible, without crop being left behind, because the catching member picks up and displaces the crop along its entire outer dimension in contrast to known, outwardly directed tines which do not pick up crop with such a dimension. Nevertheless, large centrifugal forces are generated as a result of the relatively large radial dimensions of the members 15 and these forces tend to tauten the flexible crop engaging member or at least its flexible part, so diminishing its deformation under tangentially directed operative loads.

- 19 -

0155734

CLAIMS:

1. A crop displacing machine comprising a drivable rake member (3,7,8,9,10) provided with crop engaging members (15) which are mounted on the rake member (3,7,8,9,10) for upwards and downwards movement independently of each other, characterised in that the crop engaging members (15) each comprise a flexible part (28,32,37,42,48A) made from natural or synthetic rubber or a synthetic resin, said flexible part, during operation, being in contact with stubble on a field to be worked.

2. A machine as claimed in claim 1, characterised in that each crop engaging member (15) comprises a metal holder (26).

3. A machine as claimed in claim 2, characterised in that the holder (26) is disposed near an upper edge of the crop engaging member (15).

4. A machine as claimed in claim 1 or 2, characterised in that the holder (26) is disposed in one end region only of the crop engaging member (15).

5. A machine as claimed in any one of the preceding claims, characterised in that each crop engaging member is substantially in the form of a panel.

6. A machine having a drivable rake member (3, 7,8,9,10) provided with a crop engaging member (15) which is mounted for upward and downward movement on the rake member (3,7,8,9,10), charcterised in that the crop engaging member (15) is in the form of a panel.

7. A machine having a drivable rake member (3, 7,8,9,10) characterised in that a crop engaging member (15) comprising (a) metal and (b) a flexible part (28,32,37,42,48A) made from natural or synthetic rubber or a synthetic resin is provided on the rake member (3,7,8,9,10).

8. A machine as claimed in any one of the preceding claims, characterised in that the flexible part (28,32,37,42,48A) of the crop engaging member (15) is provided with a reinforcing and/or stiffening insert.

9. A machine as claimed in any one of the preceding claims, characterised in that the flexible part (28, 32,37,42,48A) is provided with one or more ridges (36,40,41,48).

10. A machine as claimed in claim 9, characterised in that a ridge (40) is provided near an upper edge of the flexible part (42,48A) of the crop engaging member (15).

11. A machine as claimed in claim 10, characterised in that the ridge (40) extends along the upper edge.

12. A machine as claimed in any one of claims 9 to 11, characterised in that at least one ridge (41,48) is provided near a lower edge of the crop engaging member (15).

13. A machine as claimed in any one of the preceding claims, characterised in that the crop engaging member (15) comprises at least two flexible units (32,39,47) freely projecting downwardly.

14. A machine as claimed in claim 13, characterised in that the units (32,39,47) are identical to each other.

15. A machine as claimed in claim 13 or 14, characterised in that each unit (32) comprises projecting parts (34) which extend freely downward.

16. A machine as claimed in claim 15, characterised in that the projecting parts (34) are inclined outwardly, with respect to the rake member (3,7,8,9,10) from top to bottom.

17. A machine as claimed in any one of claims 13 to 16, characterised in that the units (32) are fastened separately to a common holder (26).

18. A machine as claimed in claim 13 or 14, characterised in that the units (39,47) are defined by interruptions (38,46) in the flexible part (37,42).

19. A machine as claimed in claim 18, characterised in that the interruptions (46) comprise recesses.

20. A machine as claimed in any one of claims 13 to 19 characterised in that at least one of the units (32, 37, 42)is provided with projections (35, 36, 48) disposed on the front of the unit (32, 37,42) with respect to the direction of rotation of the rake member (3, 7, 8, 9, 10).

21. A machine as claimed in claim 20,characterised in that the projections (36, 48) comprise ridges.

22. A machine as claimed in claim 20 or 21, characterised in that the projections (35) are substantially conical or frustoconical.

23. A machine as claimed in any one of the preceding claims, characterised in that the flexible part (42, 48A) is provided with metal projections (43, 50).

24. A machine as claimed in claim 23, characterised in that the metal projections (43,50) are embedded in the material of the flexible part(42,48A).

25. A machine as claimed in claim 23 or 24, characterised in that the metal projections (43) are disposed in holes.

26. A machine as claimed in any one of claims 23 to 25, characterised in that the metal projections (50) have freely projecting, downwardly extending end portions operating as tines.

27. A machine as claimed in any one of the preceding claims, characterised in that the flexible part (28,32,37) of the crop engaging member (15) is thicker near the upper edge than it is near the lower edge.

28. A machine as claimed in claim 27, characterised in that the flexible part (28,32,37) terminates at the underside in a tapering lip.

29. A machine as claimed in any one of the preceding claims, characterised in that, as viewed in a direction opposite the direction of rotation, the crop engaging member (15) has a concave shape.

30. A machine having a drivable rake member (3,7,8,9,10) provided with a crop engaging member (15), characterised in that the crop engaging member (15) has a concave shape.

31.      A machine as claimed in claim 29 or 30, characterised in that the crop engaging member(15) has a lower edge which projects forwardly with respect to the direction of operative rotation of the rake member (3,7,8,9,10).

32.      A machine as claimed in claim 29 or 30, characterised in that the crop engaging member has a lower edge which projects to the rear with respect to the direction of operative rotation of the rake member (3,7,8,9,10).

33.      A machine as claimed in claim 31 or 32, characterised in that the material of the crop engaging member (15) is in the form of a curved panel when unstressed.

34.      A machine as claimed in any one of the preceding claims, characterised in that the crop engaging member (15) is in the form of a panel having a projecting ridge in its lower region.

35.      A machine as claimed in any one of the preceding claims, characterised in that the crop engaging member (15) is in the form of a panel having a projecting ridge in its upper region.

36.      A machine as claimed in any one of the preceding claims, characterised in that the crop engaging member (15) is at least partly curved outwardly and to the rear with respect to the direction of operative rotation of the rake member (3,7,8,9,10).

37.      A machine as claimed in claim 36, characterised in that the free end region of the crop engaging member (15) is approximately contiguous to a circle centred on the rotary axis (12) of the rake member (3,7,8,9,10).

38.      A machine as claimed in any one of the preceding claims, characterised in that the crop engaging member (15)is movable up and down about an approximately tangential pivotal axis (16).

39. A machine as claimed in any one of the preceding claims, characterised in that during operation the crop engaging member (15) is resiliently biassed downwards.

40. A machine as claimed in claim 39, characterised in that the resilient bias is adjustable.

41. A machine as claimed in any one of the preceding claims, characterised in that the crop engaging member (15) is movable about an upwardly directed axis with respect to the direction of rotation into a plurality of positions and fixable therein.

42. A machine as claimed in any one of the preceding claims, characterised in that the crop engaging member (15) is directed outwardly of the rake member (3,7,8,9,10) during operation.

43. A machine as claimed in any one of the preceding claims, characterised in that the crop engaging member (15) is mounted on a rim (13) of the rake member (3,7, 8,9,10).

44. A machine as claimed in any one of the preceding claims, characterised in that the machine is a hay-making machine and the rake member (3,7,8,9,10) is drivable about an upwardly directed, forwardly inclined rotary axis (12).

45. A machine as claimed in any one of the preceding claims, characterised in that the rake member (3,7,8,9,10) can be driven from a power take-off shaft of a tractor moving the machine.

46. A machine as claimed in any one of the preceding claims, characterised in that the machine comprises a frame (1) which can be attached to a three-point lifting device of a tractor.

47. A machine as claimed in any one of the preceding claims, characterised in that during operation the rake member (3,7,8,9,10) is supported by a ground wheel which is adjustable upwardly and downwardly and fixable in any one of a plurality of positions

0155734

with respect to the rake member (3,7,8,9,10).

0155734

FIG. 1

FIG. 2

FIG. 3

0155734

FIG.4

FIG.5

FIG.6

FIG. 7

FIG. 8

FIG. 9

FIG. 10

FIG. 11

FIG. 12

414

0155734

FIG.13

FIG.14

FIG.15

FIG.16

FIG.17